# EUROPEAN PATENT APPLICATION

(11) **EP 1 345 430 A2**
(43) Date of publication of application: **17.09.2003**
(21) Application number: 03005260.9
(22) Date of filing: 10.03.2003
(51) Int. Cl.: H04N 5/76

(54) **Digital broadcast receiving apparatus, digital information recording and reproducing apparatus, and digital information recording and reproducing system**

(30) Priority: 15.03.2002 JP 2002073015
(71) Applicant: Kabushiki Kaisha Toshiba, Tokyo (JP)
(72) Inventor: Yamazaki, Masahiko, 1-1-1 Shibaura, Minato-ku Tokyo 105-8001 (JP)
(74) Representative: Henkel, Feiler, Hänzel

(57) **Abstract**

The present invention includes a first recording and reproducing apparatus (11) having a recording section (30, 31) configured to record digital information and a control section (33, 34) configured to read the digital information from the recording section (30, 31) and then output the information to the exterior, on the basis of a backup request transmitted to the recording section (30, 31), and a second recording and reproducing apparatus (13) configured to be controlled by the first recording and reproducing apparatus (11) to record the digital information output to the exterior by the control section (33, 34).

## Description

The present invention relates to a digital broadcast receiving system that receives, for example, digital television broadcasting, and in particular, to a digital broadcast receiving apparatus, a digital information recording and receiving apparatus, and a digital information recording and reproducing system all of which have a function of digitally recording received program information on a built-in recording medium.

As well known, digital television broadcasting using, for example, satellites or cables has been popular in recent years. Digital broadcasting receivers have thus been widely used which receive digital television broadcasting of this kind and which have a function of recording stream information from received programs on a built-in HDD (Hard Disk Drive).

Such a digital broadcasting receiver with a built-in HDD can also control external equipment such as a D-VHS (Digital Video Home System) VCR connected to the receiver in conformity with the IEEE (Institute of Electrical & Electronics Engineers) 1394 standard to digitally copy programs digitally recorded in the HDD, to the D-VHS equipment.

However, only copy-enabled programs can be digitally copied because the other programs are prohibited from being copied owing to their copyrights. For example, programs such as movies undergo restrictions on digital copying based on the digital broadcasting receiver; they are prohibited from being copied or are allowed to be copied only once. Thus, all data recorded in the HDD cannot be recorded on the D-VHS equipment.

Accordingly, if for example, data recorded in the HDD is to be backed up, only some programs can be backed up which are free from copy restrictions. Thus, if the HDD fails, some recorded programs can never be viewed again.

In general, the HDD is said to have five years or 20,000 hours to be operative, and its lifetime may be reduced depending on the operating environment (temperature, humidity, vibration, and the like). Further, if the HDD is used under environmental conditions other than those specified or is improperly used, its operation may be hindered by head crash, adhesion, vibration, or the like. In the worst case, problems such as loss of data may occur.

In the prior art, if the HDD fails or malfunctions because of a reduced lifetime, then unloading of recorded data must be abandoned and there is no other way but to replace it with a new one. Further, although HDD manufacturers have recently provided data recovery services, data cannot be recovered from all malfunctioning HDDs. In some cases, it becomes impossible to recover part or all of the data. Another problem is that high costs and much time are required to check and recover data.

Thus, it is desirable that manufacturers periodically replace the HDD with a new one while backing up (transferring) its contents, as desired by a user. It is also desirable to back up data from the HDD if the user requests the manufacturer to repair a defective product or the like, in order to protect the data recorded by the user.

If for example, a component of a product with a built-in HDD which is different from the HDD is to be repaired, the repair worker must unpack the delivered product and repair the component while being careful not to destroy the HDD. In particular, if the HDD must be removed for repair, the worker must pay the closest attention. Since there is still a possibility of destroying the HDD during a repair operation, it is desirable to back up data from the HDD before the operation (before removing the upper panel or the like by removing screws or the like from the product).

However, in the prior art, there is no other way but to remove and connect the HDD to a personal computer or the like to copy data from the HDD to another HDD. Accordingly, at present, there are no simple methods used for a digital broadcasting receiver with a built-in HDD to back up data from the HDD without the need for unpacking.

As described previously, users can freely view program data recorded in the HDD, but copy control information is added to some programs to prohibit them from being copied in order to protect the corresponding copyrights. That is, if program data in the HDD can be copied easily, there may be illegal acts; the program data may be obtained by a third party, who may copy it illegally.

Normally, if program data recorded in the HDD is to be recorded using D-VHS equipment externally connected to the HDD in conformity with the IEEE 1394 standard, the digital broadcasting receiver converts digital data such as video and sound into streams based on the IEEE 1394 standard. The digital broadcasting receiver then outputs the converted data to the D-VHS equipment for recording. However, copy-controlled programs are controlled so as not to be output.

The copy-controlled programs cannot be output even by the method of recording program data already recorded in the HDD, using the D-VHS equipment externally connected to the HDD in conformity with the IEEE 1394 standard. Accordingly, not all data in the HDD can be backed up.

Jpn. Pat. Appln. Publication KOKAI No. 2001-332021 discloses a configuration used when reproducing duplication-prohibited data and recording it on another recording medium, to make each reproduced part irreproducible to prohibit duplication. However, this publication does not describe data backup.

An embodiment of the present invention may provide a digital broadcast receiving apparatus, a digital information recording and receiving apparatus, and a digital information recording and reproducing system all of which enable data recorded on a built-in recording medium to be easily backed up during repair or the like without the need to remove the recording medium.

According to one aspect of the present invention, there is provided a digital broadcast receiving apparatus comprising:
a receiving section configured to receive digital broadcasting and unload predetermined program information, a recording section configured to digitally record the program information obtained by the receiving section, and a control section configured to read the program information from the recording section and then output the information to an exterior, on the basis of a backup request transmitted to the recording section.

According to another aspect of the present invention, there is provided a digital information recording and reproducing apparatus comprising:
a recording section configured to record digital information and a control section configured to read the digital information from the recording section and then output the information to an exterior, on the basis of a backup request transmitted to the recording section.

According to still another aspect of the present invention, there is provided a digital information recording and reproducing system comprising:
a first recording and reproducing apparatus having a recording section configured to record digital information and a control section configured to read the digital information from the recording section and then output the information to an exterior, on the basis of a backup request transmitted to the recording section, and a second recording and reproducing apparatus configured to be controlled by the first recording and reproducing apparatus to record the digital information output to the exterior by the control section.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a view showing an embodiment of the present invention to describe the entire system configuration;
FIG. 2 is a block diagram shown to describe a digital broadcasting receiver according to this embodiment in detail; and
FIG. 3 is a flowchart shown to describe a data backup operation according to this embodiment.

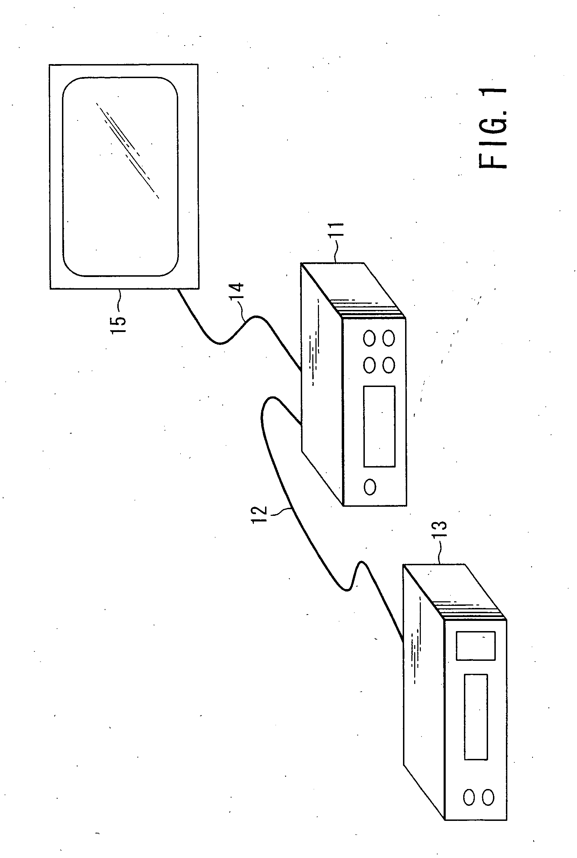

An embodiment of the present invention will be described below in detail with reference to the drawings. In FIG. 1, reference numeral 11 denotes a digital broadcasting receiver. D-VHS equipment 13 is connected to the digital broadcasting receiver 11 via an IEEE 1394 connection cable 12. The digital broadcasting receiver 11 can control operations of the D-VHS equipment 13.

Further, a television receiver 15 is connected to the digital broadcasting receiver 11 via an AV (Audio Video) connection cable 14. Thus, a user can view and listen to signals for videos and sounds on the television receiver 15, the signals being output by the digital broadcasting receiver 11.

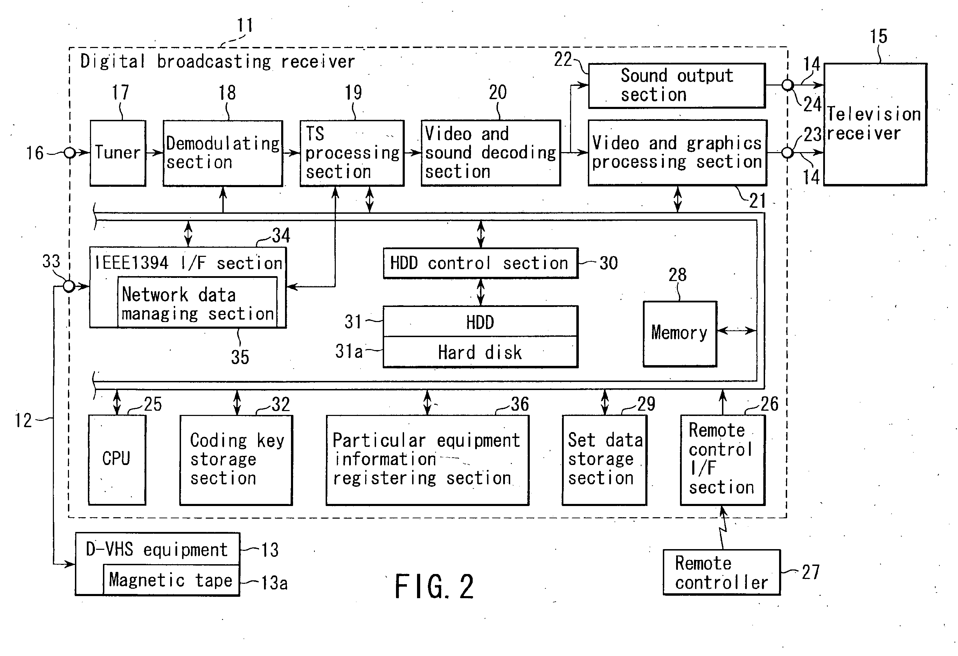

FIG. 2 shows the digital broadcasting receiver 11 in detail. In the following description, the digital broadcasting receiver 11 receives BS (Broadcasting Satellite) digital broadcasting. However, it may receive CS (Communication Satellite) digital broadcasting or terrestrial digital broadcasting. Alternatively, it may receive wire broadcasting such as CATV.

Furthermore, the digital broadcasting receiver 11 may be a set top box that supplies video signals, sound signals, and the like to the television receiver 15 as shown in the figure. However, it may be integrated with the television receiver 15. Alternatively, it may be a portable mobile TV (Television) or the like.

That is, high-frequency signals from a satellite are supplied to an input terminal 16, from which they are supplied to a tuner 17. The tuner 17 unloads and down-converts signal components of a predetermined frequency and then supplies the down-converted signal components to a demodulating section 18. The demodulating section 18 demodulates the digitally modulated signals and further executes a process such as error correction on the demodulated signals to generate a TS (Transport Stream).

The TS output by the demodulating section 18 is supplied to a TS processing section 19. The TS processing section 19 separates the TS into video and sound streams, which are then supplied-to a video and sound decoding section 20.

The video and sound decoding section 20 decodes the MPEG (Moving Picture Image Coding Experts Group)-compressed video data and then outputs the decoded data to a video and graphics processing section 21. In this regard, streams for pay broadcasting are normally scrambled, and thus such streams are decoded so as to be descrambled.

The sound data is D/A (Digital/Analog)-converted and then output via a sound output section 22 as analog sound signals.

The video and graphics processing section 21 executes various processes of converting the formats of video signals and an OSD (On Screen Display) process of superimposing graphic data on videos. Video and sound signals output by the video and graphics processing section 21 and the sound output section 22 are supplied from output terminals 23 and 24 to the television receiver 15 via the AV connection cable 14. The television receiver 17 then displays the video while reproducing the sound.

A CPU (Central Processing Unit) 25 provides control required to select a program and decode digital video and sound, controls various user interfaces such as an EPG (Electronic Program Guide), and executes a process of receiving operation information from a remote controller 27 via a remote control input I/F (Interface) section 26.

A memory 28 is used as a medium that stores programs, character fonts, and graphic display data which are provided to the CPU 25 and various information such as the EPG obtained from ground wave data, or a medium that provides a work area in which various processes can be executed.

A set data storage section 29 is composed of an EEPROM (Electrically Erasable and Programmable Read Only Memory) or a flash memory. The set data storage section 29 stores various set information such as information set by the user such as a received channel, volume, a connected television receiver or VTR (Video Tape Recorder), and a telephone line connection, user registered set information such as the user's name. When the digital broadcasting receiver 11 is powered on, required information is read from the set data storage section 29 and set.

To record a received program, an HDD control section 30 codes video and sound streams from the TS processing section 19 or data for data broadcasting or the like on order to protect the contents, and records the data on a hard disk 31a via an HDD 31. Further, to reproduce a recorded program from the HDD 31, the HDD control section 30 decodes and outputs the data to the video and sound decoding section 20 via the TS processing section 19. In this case, information used for coding and decoding (this information will hereinafter be referred to as "coding keys") is stored in a coding key storage section 32.

Further, the digital broadcasting receiver 11 comprises an I/O terminal 33 that conforms to the IEEE 1394 standard. The I/O terminal 33 is typically also referred to as an "i. LINK connection terminal" or a "DV (Digital Video) terminal". The I/O terminal 33 is used to connect the digital broadcasting receiver 11 through the IEEE 1394 connection cable 12 to a digital broadcasting receiver or digital information reproducing equipment (for example, digital video equipment, a digital video camera, or a DVD drive) similarly provided with an I/O terminal that conforms to the IEEE 1394 standard so that digital data can be communicated between these digital broadcasting receivers. This suppresses degradation of image or sound quality or the like and enables various digital data other than video and sound to be transmitted.

If for example, the D-VHS equipment 13 connected to the I/O terminal 33 is to record a received program on a magnetic tape 13a, then a network data managing section 35 in an IEEE 1394 I/F section 34 first carries out authentication to check whether or not the equipment (in this case, the D-VHS equipment 13) connected to an IEEE 1394 network can handle data correctly.

Then, once the equipment is successfully authenticated, the TS processing section 19 outputs digital signals for video and sound in the form of a TS based on the IEEE 1394 standard to the I/O terminal 33 via the IEEE 1394 I/F section 34. The D-VHS equipment 13 then records the signals on the magnetic tape 13a.

Alternatively, if the D-VHS equipment 13 reproduces data from the magnetic tape 13a, the network data managing section 35 in the IEEE 1394 I/F section 34 may first similarly authenticate the D-VHS equipment 13. Then, digital signals supplied by the D-VHS equipment 13 are switched to digital broadcasting signals, which are then supplied to the TS processing section 19 via the IEEE 1394 I/F section 34. The TS processing section 19 unloads video and sound streams from the input digital signals, and executes, on these streams, a process similar to the one executed on digital broadcasting signals so that the streams can be displayed on the television receiver 15.

In this case, in the digital broadcasting receiver 11, the network data managing section 35 checks particular equipment information stored in a particular equipment information registering section 36 against equipment information obtained from the equipment connected to the IEEE 1394 network. The network data managing section 35 thus carries out authentication by determining whether or not the connected equipment is the particular equipment.

The particular equipment information is, for example, an IEEE 1394-unique ID (identifier) or the like. Since a unique ID is assigned to equipment having functions that conform to the IEEE 1394 standard, it can be determined whether or not this equipment is the particular equipment, by storing in the particular equipment registering section 36 one of the IEEE 1394-unique IDs of equipment manufactured by a manufacturer A between a certain month in a certain year and a certain month in a certain other year.

The digital broadcasting receiver 11 with the built-in HDD configured as described above has a function of allowing the user to record and reproduce a received program in and from the HDD 31. However, the HDD 31 may malfunction owing to a failure or its limited lifetime, so that recorded data must be periodically backed up.

Further, when the HDD 31 is replaced with a new one, recorded data must be unloaded from the HDD 31 and backed up. Furthermore, when the product is repaired by a manufacturer or a service company, the data in the HDD 31 must be backed up even if a component of the product other than the HDD 31 or a function other than the HDD-related ones is to be repaired, because the repair operation may cause the HDD 31 to fail or malfunction.

Thus, this embodiment has a function of using a simple method to back up data from the HDD 31 without disassembling the product (digital broadcasting receiver 11) to remove the HDD 31.

This method comprises using the D-VHS equipment 13, connected to the I/O terminal 33, to digitally record data recorded in the HDD 31, on the magnetic tape 13a. Since connections based on the IEEE 1394 standard are used, operations of the D-VHS equipment 13 can be controlled via the digital broadcasting receiver 11. Thus, data can be transferred easily from the HDD 31 to the D-VHS equipment 13 and from the D-VHS equipment 13 to a new HDD 31 after replacement.

However, even when the data in the HDD 31 can be obtained easily, it is necessary to inhibit third parties from carrying out illegal copying or the like in order to protect the copyrights and contents of program data.

Now, description will be given of protection of the copyright and contents of program data. First, to record program data in the HDD 31, the digital broadcasting receiver 11 codes the data before recording in order to protect the contents. A coding process executed on program data to be recorded in the HDD 31 will hereinafter be expressed as coding A. To reproduce program data recorded in the HDD 31, the data is decoded. Further, information used for coding and decoding (this information will hereinafter be expressed as coding keys A) is stored in the coding key storage section 32.

The coding keys A are designed and produced to provide different information for each digital broadcasting receiver. Thus, if an HDD containing program data recorded by another digital broadcasting . receiver is replaced with the HDD 31 of the digital broadcasting receiver 11, the program data cannot be decoded. Conversely, if the HDD 31 of the digital broadcasting receiver 11 is replaced with another HDD of another digital broadcasting receiver, the program data cannot be decoded. Thus, even if a third party obtains program data from the HDD for a purpose other than his or her own enjoyment, he or she cannot view the program.

Furthermore, even when transferring program data to the D-VHS equipment 13 connected to the receiver 11 in conformity with the IEEE 1394 standard, the digital broadcasting receiver 11 uses a copy guard (copy protection) technique in order to protect the contents. This copy guard is a technique such as DTCP (Digital Transmission Content Protection).

First, before transmission of program data, the digital broadcasting receiver 11 authenticates the D-VHS equipment 13 to check whether or not it is the particular equipment that can handle data correctly. Once the D-VHS equipment 13 has been authenticated, the digital broadcasting receiver 11 passes information used for coding and decoding (this information will hereinafter be expressed as "coding keys B") to the D-VHS equipment 13.

The digital broadcasting receiver 11 further codes the program data in the HDD 31, which has been processed with coding keys A, in order to achieve an IEEE 1394 connection. The digital broadcasting receiver 11 thus converts the data into a stream based on the IEEE 1394 standard and then outputs the stream obtained to the I/O terminal 33. The coding process executed on program data to achieve an IEEE 1394 connection will hereinafter expressed as "coding B".

The D-VHS equipment 13 uses coding keys B to decode the input program data and records the decoded data on the magnetic tape 13a. Further, it is possible to transmit not only coding keys B but also copy control information added to each program and indicating that the data is prohibited from being copied or allowed to be copied only once. This protects data from unauthenticated equipment.

In this manner, a dual coding process is executed using coding keys A and coding keys B. Then, even if a third party obtains program data output to an exterior by the digital broadcasting receiver 11 through an IEEE 1394 connection, it is difficult for the third party to reproduce the program data correctly. Consequently, the program data is prevented from being illegally copied for abuse, thus enabling the copyrights and contents of the program data to be protected.

Now, differences between coding A and coding B will be described. Coding A is intended to protect the contents in the HDD 31 and is carried out for each program data file in the HDD 31 or for each appropriate unit of program data. Thus, there are as many coding keys A as program data or blocks.

Further, coding B is intended to protect data transmitted on the IEEE 1394-based network. This is because data on the network can be obtained easily by a third party and may be abused, for example, altered or illegally copied.

Data output to the network is converted into a TS format that conforms to the IEEE 1394 standard. The TS is further coded while changing the contents of the relevant coding key every appropriate unit time. That is, the coding keys are changed every appropriate unit time, so that each time coding keys B are changed, they are exchanged between the digital broadcasting receiver 11 and the D-VHS equipment 13.

Since the data recording side (D-VHS equipment 13) cannot always monitor coding keys B or all coding keys cannot be stored in response to temporal changes, coding keys B are decoded before being recorded on the magnetic tape 13a. Further, certain recording equipment does not allow video and sound data to be recorded because coding B has changed the format of these data and because the equipment cannot recognize the changed format.

Thus, coding A and coding B differ in their contents and methods.

In this embodiment, for the equipment authentication for coding B, only the particular equipment can be authenticated. The equipment is authenticated by storing information such as the IEEE 1394-unique ID of the particular equipment in the particular equipment information registering section and checking information on the authenticated equipment against this data.

For example, the particular equipment has one of the IEEE 1394-unique IDs of equipment manufactured by manufacturer A between a certain month in a certain year and a certain month in a certain year, or one of the IEEE 1394-unique IDs of a small number of pieces of D-VHS equipment that can be connected to the digital broadcasting receiver. This allows a previously specified D-VHS equipment to be identified as one that can be used to transfer program data from the HDD. Only the previously specified equipment is allowed to transmit coding keys B. Further, coding keys B, like coding keys A, are stored in the coding key storage section 32.

Here, the transfer of program data from the HDD 31 described above cannot be carried out in a normal operation mode of the digital broadcasting receiver 11. This can be carried out only in a manufacture mode and a repair mode (also referred to as a "service mode"), further enhancing the protection of the copyrights and contents of the program data.

In the normal mode, to record a received program in the D-VHS equipment 13 connected to the digital broadcasting receiver 11 in conformity with the IEEE 1394 standard, the digital broadcasting receiver 11 converts video and audio digital signals into streams based on the IEEE 1394 standard. The digital broadcasting receiver 11 outputs the streams obtained to the I/O terminal 33. Then, the D-VHS equipment 13 records the streams on the magnetic tape 13a.

However, copy-controlled programs are controlled so as not to be output according to the IEEE 1394 standard. This is because the output of the program data is limited by the copy guard technique such as the DTCP, described above by way of example.

Thus, if program data recorded in the HDD 31 is to be recorded using the D-VHS equipment 13, copy-controlled programs normally cannot be output. As a result, not all data in the HDD 31 can be backed up.

Accordingly, in this embodiment, software used to transfer data from the HDD 31 through an IEEE 1394 connection is intended to back up the data in the HDD 31. This software is operative only in the manufacture or repair mode, which is restricted so as not to be used by the user.

In the manufacture mode, in a manufacture site, software is operated which is mainly intended to carry out various types of adjustment or the like before the product is shipped. In the repair mode (also referred to as the "service mode"), software is operated which is mainly intended to allow service personnel to repair or regulate the product at the client's site or to return the defective product to the manufacturer before repair or adjustment, if any problem occurs in the product on the market.

The manufacture and repair modes have software structures that cannot by entered easily by the user. A specific operation is required to enter the manufacture or repair mode.

For example, the software for the digital broadcasting receiver 11 is structured so that the manufacture or repair mode can be entered only if an exclusive remote control key code is received or a remote control key or a main body key is subjected to a particular operation.

Alternatively, software exclusively used in the manufacture and repair modes may be written in a portable small-sized storage medium such as an IC card or a memory card. Then, when the small-sized storage medium is installed in the digital broadcasting receiver 11, the exclusive software is started to activate the manufacture or repair mode.

Thus, in the normal operation mode, the user and the third party cannot freely copy copy-controlled program data. On the other hand, only in the manufacture and repair modes, the software used to transfer data from the HDD 31 as described above is available. This further enhances the protection of the copyrights and contents of the program data in the HDD 31.

Now, description will be given of the D-VHS equipment 13, which records program data from the HDD 31. First, since data transfers from the HDD 31 can be accomplished only in the manufacture and repair modes, the D-VHS equipment 13 must also be operated using exclusive software, in a manner different from that of ordinary commercially available equipment.

As in the case with the digital broadcasting receiver 11, transfers of program data must be accomplished using an exclusive software structure operated only in the manufacture and repair modes, or D-VHS equipment that operates totally differently from commercially available equipment. Further, the equipment must have information such as a particular IEEE 1394-unique ID that can be authenticated, so as to be authenticated for an IEEE 1394 connection.

The IEEE 1394-unique ID in the particular equipment registering section 36 is stored in each digital receiver in advance. Alternatively, for example, a receiver program may be downloaded through a satellite, and an IEEE 1394-unique ID may be written to the program. In this satellite downloading, in order to eliminate defects from the receiver program or to add functions to it, a receiver program is superimposed on a broadcasting signal from a satellite before transmission, and the receiver receives this signal and automatically replaces its receiver program with the transmitted one.

This is advantageous in terms of security. That is, if the IEEE 1394-unique ID is to be written in the particular equipment information registering section 36 or is rewritten, it cannot be altered easily by a third party because it is written in the receiver program.

Alternatively, the IEEE 1394-unique ID of the particular equipment may be written in a portable small-sized storage medium such as an IC card or a memory card. Then, when the small-sized storage medium is installed in the digital broadcasting receiver 11, the IEEE 1394-unique ID is written into the particular equipment information registering section 36 or is rewritten.

This allows ID information on the D-VHS equipment actually used to be written during manufacture, repair, or operations at the client's site. Consequently, the ID information is not only protected but serviceability is also improved.

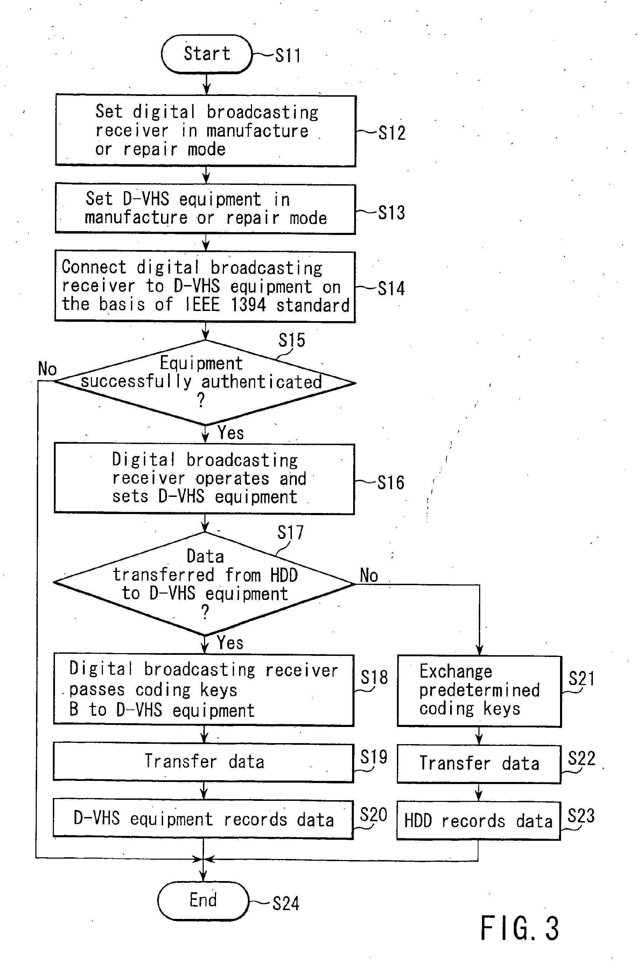

Next, FIG. 3 is a flow chart generally showing operations of the digital broadcasting receiver 11 described above. First, at the start (step S11), a particular operation is performed to set the digital broadcasting receiver 11 is set in the manufacture or repair mode (step S12).

Subsequently, the predetermined D-VHS equipment 13 used to transfer data is set in the manufacture or repair mode (step S13). In this state, in the digital broadcasting receiver 11 and the D-VHS equipment 13, the data transfer software becomes operative.

Then, the I/O terminal 33 of the digital broadcasting receiver 11 is connected to an IEEE 1394 I/O terminal (not shown) of the D-VHS equipment 13 via the IEEE 1394 connection cable 12 (step S14).

Then, the digital broadcasting receiver 11 authenticates the connected D-VHS equipment 13 by comparing the IEEE 1394-unique ID of the D-VHS equipment 13 with the IEEE 1394-unique ID information registered in the particular equipment information registering section 36. The digital broadcasting receiver 11 thus checks whether or not the D-VHS equipment 13 can transfer and receive data to and from the HDD 31 (step S15). If the equipment is not successfully authenticated (NO), the process is ended (step S24).

If the equipment is successfully authenticated at step S15 (YES), the digital broadcasting receiver 11 controls the D-VHS equipment 13 and operates and sets it to be able to transfer data (step S16). Then, a value is set which determines whether data is to be transferred from the HDD 31 to the D-VHS equipment 13 or from the D-VHS equipment 13 to the HDD 31 (step S17).

If data is to be transferred from the HDD 31 to the D-VHS equipment 13 (YES), the digital broadcasting receiver 11 passes coding keys B used for coding and decoding, to the D-VHS equipment 13 (step S18).

The digital broadcasting receiver 11 further executes coding B for an IEEE 1394 connection on the program data in the HDD 31, which has been processed using coding keys A as described previously. The coded data is output to the I/O terminal 33 and then transferred (step S19).

The D-VHS equipment 13 uses coding keys B to carry our decoding and records the decoded data on the magnetic tape 13a (step S20). Then, the process is ended (step S24). This allows the data in the HDD 31 to be backed up in the D-VHS equipment 13.

Next, description will be given of the case in which the data backed up in the D-VHS equipment 13 is returned to the HDD 31 again. First, a particular operation is performed to bring the digital broadcasting receiver into the manufacture or repair mode (step S12).

Subsequently, the predetermined D-VHS equipment 13 used to transfer data is brought into the manufacture or repair mode (step S13). In this state, in the digital broadcasting receiver 11 and the D-VHS equipment 13, the data transfer software becomes operative.

Then, the I/O terminal 33 of the digital broadcasting receiver 11 is connected to the IEEE 1394 I/O terminal (not shown) of the D-VHS equipment 13 via the IEEE 1394 connection cable 12 (step S14).

Then, the digital broadcasting receiver 11 authenticates the connected D-VHS equipment 13 by compares the IEEE 1394-unique ID of the D-VHS equipment 13 with the IEEE 1394-unique ID information registered in the particular equipment information registering section 36. The digital broadcasting receiver 11 thus checks whether or not the D-VHS equipment 13 can transfer and receive data to and from the HDD 31 (step S15).

Alternatively, the D-VHS equipment 13 may store ID information on the digital broadcasting receiver 11 which has transferred data to the HDD 31. Then, when the D-VHS equipment 13 is authenticated, it can output data only to the digital broadcasting receiver 11.

If the equipment is not successfully authenticated (NO), the process is ended (step S24). If the equipment is successfully authenticated (YES), the digital broadcasting receiver 11 controls the D-VHS equipment 13 and operates and sets it to be able to transfer data (step S16).

Subsequently, a value is set which determines whether data is to be transferred from the HDD 31 to the D-VHS equipment 13 or from the D-VHS equipment 13 to the HDD 31 (step S17).

If data is to be transferred from the D-VHS equipment 13 to the HDD 31 (NO), then the D-VHS equipment 13 uses coding keys B exchanged during data transfers from the HDD 31, to carry out coding B for an IEEE 1384 connection. The D-VHS equipment 13 then transfers the coded data to the digital broadcasting receiver 11 (step S22).

At this time, the digital broadcasting receiver 11 decodes the data supplied by the D-VHS equipment 13 using coding keys B stored in the coding key'storage section 32. The decoded data is then recorded in the HDD 31 (step S23). Then, the process is ended (step S24). This allows the program data subjected to coding A to be returned to the HDD 31.

In the above description, coding keys B exchanged during data backup in the HDD 31, so that the predetermined coding key exchanging operation is not performed at step S21. This is carried out because coding keys B are already stored in the digital broadcasting receiver 11, and in order to prevent the data from being copied to another digital broadcasting receiver or from being abused by a third party.

Alternatively, when the data from the HDD 31 in the digital broadcasting receiver 11 is backed up, not only coding keys B (step S18) but also predetermined coding keys different from coding keys B may be exchanged so as to be used when the data in the D-VHS equipment 13 is returned to the HDD 31.

In another embodiment, if the unique coding keys of the D-VHS equipment 13 are used to code and transfer data, the coding keys are exchanged (step S21) before the data is transferred.

Further, when the digital broadcasting receiver 11 is connected to the D-VHS equipment 31 on the basis of the IEEE 1394 standard, the connected equipment is normally authenticated and checked. If the result of this check indicates that the D-VHS equipment 13 can execute software-based processes, then the software may automatically allow the data in the HDD 31 to be transferred or may record data from the D-VHS equipment 13 in the HDD 13.

The above configuration and software-based processes enable data from the HDD 31 to be transferred easily to the D-VHS equipment via the IEEE 1394 I/O terminal 33 without disassembling the product. Then, after the data is backed up, the D-VHS equipment 13 can transfer the backed-up data to the HDD 31.

Furthermore, since the data in the HDD 31 can be backed up without disassembling the product, a technician from the manufacturer or service company can visit the user's home, where he or she can perform required operations. The present invention is thus expected to be effective in not only enabling a backup service for the HDD 31 to be implemented but also reducing the costs and time required to replace or repair the HDD 31.

Further, in the above description, the D-VHS equipment 13 is connected to the digital broadcasting receiver on the basis of the IEEE 1394 standard. However, the present invention is not limited to this aspect. This equipment may be, for example, a DVD-RAM or an HDD connection adapter which can be connected to the digital broadcasting receiver on the basis of the IEEE 1394 standard. Various types of equipment can be connected to the receiver without deviating from this standard.

Furthermore, as described above, it is possible not only to back up data from the HDD 31 of the digital broadcasting receiver 11 but also to back up data from the set data storage section 29 in the digital broadcasting receiver 11, such as an EEPROM or a flash memory, by transferring the data to the D-VHS equipment 13 connected to the receiver on the basis of the IEEE 1394 standard.

The set data storage section 29 stores various set information such as information set by the user such as a received channel, volume, a connected television receiver or VTR, and a telephone line connection, information on a channel selected before the digital broadcasting receiver has been power off, and user registered set information such as the user's address, name, and telephone number for data broadcasting.

However, there have hitherto been no methods of backing up data from an EEPROM or a flash memory if this memory is to be replaced with a new one in order to repair the product. Furthermore, in the prior art, after repair, all data is deleted to change the product back to its pre-shipped state before the product is returned to the user.

Thus, the set information is backed up in the D-VHS equipment 13 before the product is repaired, so that the data is returned to the set data storage section 28 after repair. Then, the product can be returned to the user after all of the conditions and the like set by the user have been returned to their values set prior to repair.

In this manner, the present invention allows the data in the HDD 31 and,set data storage section 29 to be backed up in the D-VHS equipment 13 through the IEEE 1394 connection and to be returned to their original positions after repair. Consequently, the product can be returned to the user after the conditions set by the user, the data recorded in the HDD 31, and the like have all been returned to their values set prior to repair.

Further, as described above, the data in the EEPROM, flash memory, or the like includes not only set values for a channel selected by the user, volume, a connected VTR, and the like but also user registered information such as his or her address, name, and telephone number. These data are transferred on the basis of the software that can operate only in the manufacture or repair mode, which cannot be used by the user. Thus, these data transfers are used only to back up the data for repair or the like which must be carried out when the product fails. Therefore, the present invention is expected to be effective in preventing program data from being abused through illegal copying or the like and also preventing the user's personal information from leaking.

In this case, after data has been transferred from the HDD 31 to the D-VHS equipment 13, all contents of the hard disk 31a are automatically deleted. Conversely, after data has been transferred from the D-VHS equipment 13 to the HDD 31, all contents of the magnetic tape 13a are automatically deleted.

## Claims

1. A digital broadcast receiving apparatus **characterized by** comprising:
a receiving section (16 to 24) configured to receive digital broadcasting and unload predetermined program information;
a recording section (30, 31) configured to digitally record the program information obtained by the receiving section (16 to 24); and
a control section (33, 34) configured to read the program information from the recording section (30, 31) and then output the information to the exterior, on the basis of a backup request transmitted to the recording section (30, 31).

2. A digital broadcast receiving apparatus according to claim 1, **characterized in that** the recording section (30, 31) executes a coding process based on first coding keys, on the program information obtained by the receiving section (16 to 24), and then digitally records the coded program information, and
the control section (33, 34) executes a coding process based on second coding keys, on the program information read from the recording section (30, 31) and coded by the first coding keys, and then outputs the coded program information to the exterior.

3. A digital broadcast receiving apparatus according to claim 2, **characterized in that** the control section (33, 34) outputs the second coding keys to the exterior.

4. A digital broadcast receiving apparatus according to claim 1, **characterized by** further comprising:
a set information recording section (29) configured to record various types of set information; and
an output section (33, 34) configured to read the various types of set information from the set information recording section (29) and then output the set information to the exterior, on a backup request transmitted to the set information recording section (29).

5. A digital information recording and reproducing apparatus **characterized by** comprising:
a recording section (30, 31) configured to record digital information; and
a control section (33, 34) configured to read the digital information from the recording section (30, 31) and then output the information to the exterior, on the basis of a backup request transmitted to the recording section (30, 31).

6. A digital information recording and reproducing apparatus according to claim 5, **characterized in that** the recording section (30, 31) executes a coding process based on first coding keys, on the digital information, and then digitally records the digital information, and
the control section (33, 34) executes a coding process based on second coding keys, on the digital information read from the recording section (30, 31) and coded by the first coding keys, and then outputs the coded digital information to the exterior.

7. A digital information recording and reproducing apparatus according to claim 6, **characterized in that** the control section (33, 34) outputs the second coding keys to the exterior.

8. A digital information recording and reproducing apparatus according to claim 5, **characterized by** further comprising:
a set information recording section (29) configured to record various types of set information; and
an output section (33, 34) configured to read the various types of set information from the set information recording section (29) and then output the set information to the exterior, on a backup request transmitted to the set information recording section (29).

9. A digital information recording and reproducing system **characterized by** comprising:
a first recording and reproducing apparatus (11) having a recording section (30, 31) configured to record digital information and a control section (33, 34) configured to read the digital information from the recording section (30, 31) and then output the information to the exterior, on the basis of a backup request transmitted to the recording section (30, 31); and
a second recording and reproducing apparatus (13) configured to be controlled by the first recording and reproducing apparatus (11) to record the digital information output to the exterior by the control section (33, 34).

10. A digital information recording and reproducing system according to claim 9, **characterized in that** the recording section (30, 31) executes a coding process based on first coding keys, on the digital information, and then digitally records the digital information, and the control section (33, 34) executes a coding process based on second coding keys, on the digital information read from the recording section (30, 31) and coded by the first coding keys, and then outputs the coded digital information to the exterior, the control section (33, 34) also outputting the second coding keys to the exterior, and
the second recording and reproducing apparatus (13) decodes the digital information output to the exterior by the control section (33, 34), on the basis of the second coding keys, to record the digital information as coded by the first coding keys.

11. A digital information recording and reproducing system according to claim 9, **characterized in that** the second reproducing and reproducing apparatus (13) reads the recorded digital information and then outputs the information to the first recording and reproducing apparatus (11), on the basis of control provided by the first recording and reproducing apparatus (11).

12. A digital information recording and reproducing system according to claim 11, **characterized in that** the second recording and reproducing apparatus (13) executes a coding process based on second coding keys, on the digital information read on the basis of the control provided by the first recording and reproducing apparatus (11), and then outputs the coded digital information to the first recording and reproducing apparatus (11).

13. A digital information recording and reproducing system according to claim 11, **characterized in that** the second recording and reproducing apparatus (13) executes a coding process based on third coding keys, on the digital information read on the basis of the control provided by the first recording and reproducing apparatus (11), and then outputs the coded digital information to the first recording and reproducing apparatus (11), the second recording and reproducing apparatus (13) also outputting the third coding keys to the first recording and reproducing apparatus (11).

14. A digital information recording and reproducing apparatus according to claim 9, **characterized in that** the first recording and reproducing apparatus (11) comprises a registering section (36) configured to register the second recording and reproducing apparatus (13) that causes the digital information to be recorded.

15. A digital information recording and reproducing apparatus according to claim 9, **characterized in that** the first recording and reproducing apparatus (11) comprises a set information recording section (29) configured to record various types of set information, and an output section (33, 34) configured to read the various types of set information from the set information recording section (29) and then output the set information to the exterior, on a backup request transmitted to the set information recording section (29), and
the second recording and reproducing apparatus (13) records the various types of set information output to the exterior by the output section (33, 34).

16. A recording and reproducing apparatus controlled by a digital information recording and reproducing apparatus (11) comprising a recording section (30, 31) configured to record digital information, and a control section (33, 34) configured to read the digital information from the recording section (30, 31) and then output the information to the exterior, on the basis of a backup request transmitted to the recording section (30, 31), the recording and reproducing apparatus recording and reproducing the digital information output by the digital information recording and reproducing apparatus (11).

17. A recording and reproducing apparatus according to claim 16, **characterized in that** the recording section (30, 31) executes a coding process based on first coding keys, on the digital information and then digitally records the coded digital information, and the control section (33, 34) executes a coding process based on second coding keys, on the digital information read from the recording section (30, 31) and coded by the first coding keys and then outputs the coded digital information to the exterior together with the second coding keys, and
the recording and reproducing apparatus uses the second coding keys to decode and record the digital information output by the digital information recording and reproducing apparatus (11).

18. A recording and reproducing apparatus according to claim 17, **characterized in that** on the basis of control provided by the digital information recording and reproducing apparatus (11), the recording and reproducing apparatus reads the recorded digital information, executes a coding process based on the second coding keys, on the digital information, and then outputs the coded digital information to the digital information reproducing and reproducing apparatus (11).

19. A recording and reproducing apparatus according to claim 17, **characterized in that** on the basis of the control provided by the digital information recording and reproducing apparatus (11), the recording and reproducing apparatus reads the recorded digital information, executes a coding process based on third coding keys, on the digital information, and then outputs the coded digital information to the digital information reproducing and reproducing apparatus (11) together with the third coding keys.
